# EUROPEAN PATENT APPLICATION

(11) **EP 1 566 966 A1**
(43) Date of publication of application: **24.08.2005**
(21) Application number: 04722977.8
(22) Date of filing: 24.03.2004
(51) Int. Cl.: H04N 7/173

(54) **DATA TRANSMISSION DEVICE**

(30) Priority: 25.03.2003 JP 2003083681
(71) Applicant: MATSUSHITA ELECTRIC INDUSTRIAL CO., LTD., Osaka 571-8501 (JP)
(72) Inventor: TOMA, Tadamasa, Osaka, 560-0085 (JP); MATSUI, Yoshinori, Nara, 630-0212 (JP)
(74) Representative: Eisenführ, Speiser & Partner
(86) International application number: PCT/JP2004/004018
(87) International publication number: WO 2004/086765

(57) **Abstract**

A data transmission apparatus (100) causes a data reception apparatus to execute an appropriate reproduction process on content data, and comprises: a file analysis unit (110) and an RTSP processing unit (101) which (i) establish and initialize a transmission path of the content data with the data reception apparatus, (ii) extract reproduction control information from an MP4 file, and (iii) transmit the extracted information to the data reception apparatus; an RTP generation unit (102) which acquires the content data from the MP4 file via a file analysis unit (110) so as to packetize the acquired content data; and an RTP delivery unit (103) which transmits the content data that has been packetized by the RTP generation unit (102).

## Description

### Technical Field

The present invention relates to a data transmission apparatus which packetizes and transmits digital content data such as moving picture, speech and text.

### Background Art

In recent years, due to the great increase in capacity of communication network and the development of transmission technique, moving picture distribution service for Personal Computer (PC) has been widely used on Internet. Also, Transparent end-to-end packet switched streaming Service (TS) 26.234 has been set as the standard by Third Generation Partnership Project (3GPP) which is an international standardization group for setting a standard for a reception terminal in wireless network. And, the moving picture distribution service for a Personal Digital Assistant (PDA) is expected to expand. In the case where media data such as speech, moving picture, still picture, and text is stored and distributed, media data and header information which is necessary for reproduction and distribution of the media data are multiplexed. MP4 has been standardized as the multiplexed file format. MP4 is a multiplexed file format standardized by International Standardization Organization (ISO)/International Engineering Consortium (IEC) Joint Technical Committee1 (JTC1)/SC29/WG11, and also employed by the TS26.234 of the 3GPP. There are two types of moving picture distribution services using the MP4.

One of the above mentioned two types of moving picture distribution services is a method called download type which directly communicates the MP4 file. At present, the download method is mainly used for the moving picture distribution on wireless terminal. However, in the moving picture distribution service, there are problems such as (i) the service is not suitable for distributing long-term content whose file size is large, and (ii) special reproduction such as forwarding cannot be executed.

The other one of the above mentioned two types of moving picture distribution services is a method called streaming type. As the method for solving the problems existing in the download type, service using the streaming type is coming to start on wireless terminal. In the MP4 file used by the streaming type, in addition to the media data which is multiplexed in the MP4 file of the download type, information called hint data for packetizing media data is stored.

According to the moving picture distribution service of the streaming type, the MP4 file itself is not distributed, but the server side refers to hint data and packetizes media data. And, the packetized media data is distributed to a terminal. The Laid-Open Patent application No. 2001-197120 by the Apple Computer, Inc. discloses the framework of the hint data. Thus, the moving picture distribution service of streaming type packetizes and distributes media data (content data), and is suitable for distributing long-term content. In addition, according to the moving picture distribution service, the server can select and distribute data of arbitrary time from content, and the service is suitable for special reproduction such as forwarding and jump-in reproduction.

The moving picture distribution service of streaming type using the MP4 file will be explained in detail as following.

In the MP4, header and media data are stored per object called a Box.

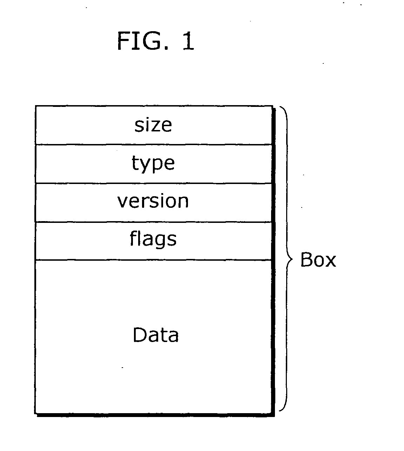

FIG. 1 is a diagram for explaining the structure of the Box. The Box includes: a size field; a type field; a version field; a flags field; and a data field.

The size field stores the size of the whole Box including the size field.

The type field stores an identifier of Box (normally four alphabet letters). The field length is four bytes. Box search within the MP4 file is executed by judging whether or not the data of consecutive four bytes matches the identifier stored in the type field.

The version field stores a version number of the Box. The flags field stores flag information set for each Box. The data field stores header information and media data. The version field and flags field are not mandatory, and do not exist in some Boxes.

Hereinafter, the identifier stored in the type field is used to refer to the Box. For example, the Box whose identifier is 'moov' is called moov.

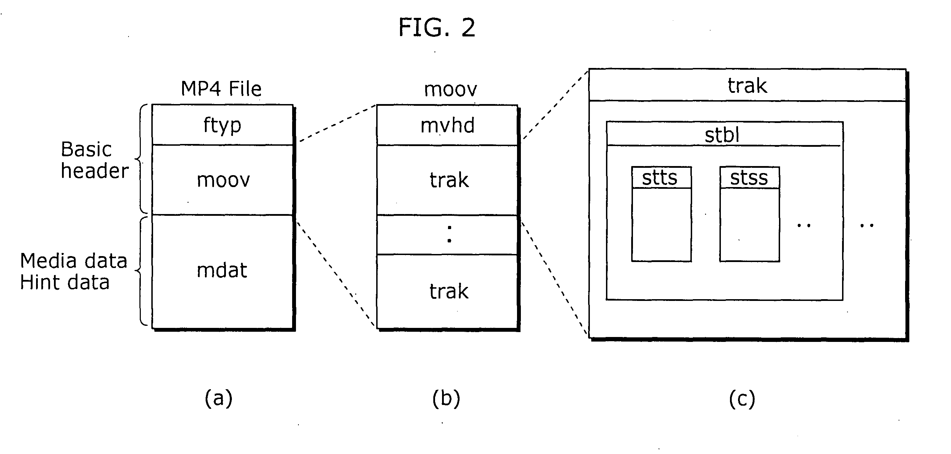

FIG. 2 is a data structure diagram showing the structure of the MP4 file.

As shown in FIG. 2(a), the MP4 file is configured by three Boxes which are ftyp, moov and mdat. And, the ftyp is arranged in the head of the file. The ftyp includes information for identifying the MP4 file. The mdat stores media data and hint data. The hint data is information which is necessary for Real Time Transmission Protocol (RTP) packetizing and transmitting the media data. The server refers to the hint data, then RTP packetizes and distributes the media data. Each media and hint data included in the mdat is respectively called a track. And, each track is identified by the track ID.

Also, in the MP4, data is handled using the unit called a sample. In the media track, one or more frames of video or audio correspond with a sample. In the hint track, information for generating one or more RTP packets corresponds with a sample.

Header information regarding a sample included in each track of the mdat is stored into the moov. In the MP4 file, the use of the moov is mandatory, and the number of the moov is one. As shown in FIG. 2(b), within the moov, Boxes are hierarchically arranged, and the header information common to the whole file is stored into the mvhd. Moreover, the header information of the hint track regarding audio, video and the track of each media is respectively stored into a different trak. Here, the track ID which is identifying information for the track is indicated by the tkhd within the trak. The trak is configured as shown in FIG. 2(c), and the information such as sample size, decoding time and display starting time is stored into each Box within the stbl.

The decoding time of the sample is stored into the stts. In other words, the difference value of the decoding time between two consecutive samples is stored into the stts. Thus, by adding the difference values, the decoding time for each sample can be acquired. Moreover, in the case where the decoding time and the display time are different, the Box called ctts for storing the difference between the decoding time and display time is used. For example, in the frame coded using bidirectional prediction, as the decoding time and the display time are different, the ctts is used to calculate the display time.

Also, in the case where the reproduction starts in the middle of the track (random access), the information indicating a sample for which decoding can be started is necessary. As the Box called stss stores a list of the samples (hereinafter, called sync samples) which can be randomly accessed. In the case where the stss does not exist, all of the samples within the track can be randomly accessed. Here, the explanation is omitted, but, in addition to the above mentioned Boxes, a plurality of Boxes such as stsz indicating sample size are stored in the stbl.

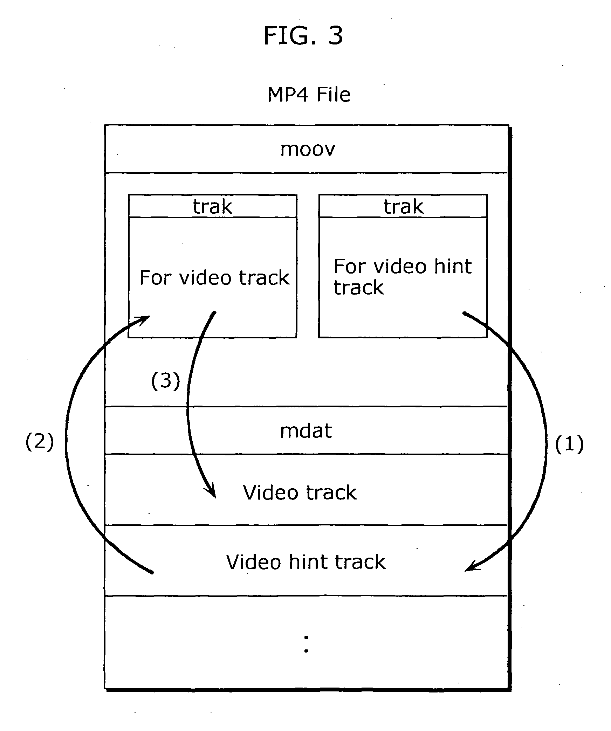

Next, the use method for the hint data will be explained using FIG. 3.

FIG. 3 is a diagram for explaining the use method for the hint data.

Here, the procedures in which the server generates the RTP packet from the sample (display time T) in the middle of the video track will be explained.
(1) The server refers to the trak for the video hint track, and acquires a sync sample in which the RTP packetized information is stored, said RTP packetized information being for the sample of the video track whose display time corresponds with T or is close to T. The sync sample is specified by referring to stts and stss, and acquiring the display time. The information necessary for generating one or more RTP packets is stored into the acquired sync sample.
   The display time of the sync sample indicates the display time of the sample of the video track whose transmission is started by the head RTP packet. The sync sample indicates which part of the video track data each packet transmits by the sample number of the video track and the byte location within the sample. For example, the "i"th (i is a natural number) RTP packet transmits from the "L"th byte (L is a natural number) of the "K"th sample (K is a natural number) to the "N"th (N is a natural number) byte of the "M"th (M is a natural number) sample.
(2) The server refers to the trak for the video track, and acquires the storage location of the samples from the "K"th to the "M"th.
(3) The server acquires data from the "L"th byte of the "K"th sample to the "N"th byte of the "M"th sample, based on the storage location acquired in (2). The server sets, for the acquired data, other information which is necessary for RTP packetizing, and generates an RTP packet.

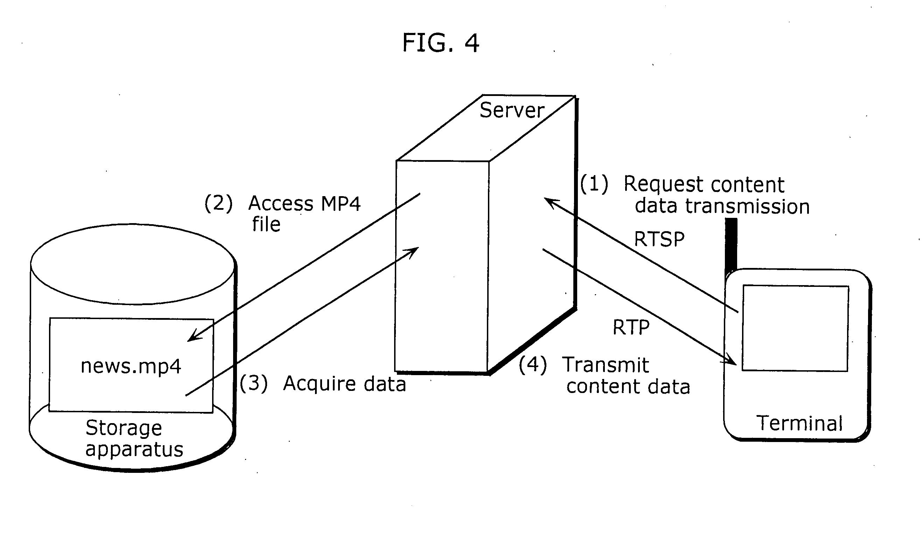

FIG. 4 is a diagram for explaining the procedures in which the media data (content data) is distributed as the RTP packet, from the server to the terminal.

Here, the MP4 file is stored into a storage apparatus. And, Real Time Transmission Protocol (RTTP) is used for reproduction control between the server and the terminal. The storage apparatus may exist inside the server, or outside the server.
(1) First, the terminal requests content data (news. mp4) transmission to the server, using RTSP.
(2) The server examines whether or not the news. mp4 can be used. In the case where the news. mp4 can be used, the server accesses the news. mp4.
(3) The server (i) analyzes the hint track of the news. mp4, (ii) acquires content data to be transmitted to the terminal, and (iii) generates an RTP packet from the content data.
(4) The server transmits, to the terminal, the RTP packet in which the content data is stored.

Next, the reproduction control executed between the server and the terminal will be specifically explained.

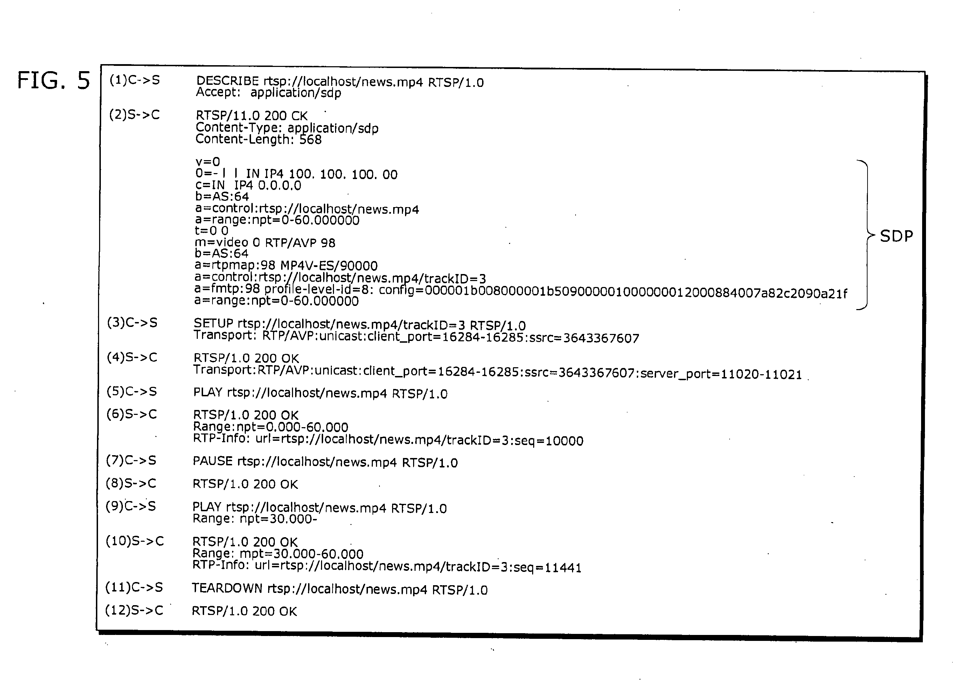

FIG. 5 is a diagram showing an example of the RTSP message exchanged in the reproduction control executed between the server and the terminal. c->s in FIG. 5 indicates the message from the terminal to the server, and s->c indicates the message from the server to the terminal.
(1) The terminal requests, to the server, the content data of the news. mp4, using DESCRIBE command.
(2) The server replies that the news. mp4 can be used, and transmits information (information about access to the news. mp4, and the like) regarding the news. mp4, using the Session Description Protocol (SDP). Here, a part of the SDP content is stored into the Box called udta which exists just under the trak and moov for the hint track of the MP4 file. The server adds the rest of the information to the above mentioned part of the SDP content, and generates the SDP content.
(3) The terminal sets, for the server, parameters used in time of transmission.
(4) The server notifies the terminal of the parameters used in time of transmission.
   By the RTSP message communication as shown in the above mentioned (1) to (4), the transmission path between the server and the terminal is established and initialized.
(5) The terminal issues PLAY command to the server, and requests transmission start of the content data of the news. mp4.
(6) The server, in response to the PLAY command, replies the message indicating the transmission start, then the transmission of the RTP packet is started. The server may issue the response to the PLAY command after the transmission start of the RTP packet.
   Here, the media data (content data) of audio and video is transmitted by the RTP packet which has a different identifier for each media. A Syncronization Source (SSRC) included in the header of the RTP packet is used for the identifier. Also, each of the RTP packets which transmit media data of audio and video is transmitted to a different port of the terminal. Thus, media data transmitted by the RTP packets may be identified referring to the port numbers. Also, in the case where a plurality of data of the same media is transmitted, such as the case where two types of audio data exist, the data transmitted by the RTP packet may be identified using the same method.
(7) to (10) of FIG. 5 show the procedures in the case where random access is executed. The messages shown in (7) to (10) show the details in the case where the terminal user skips to the thirtieth second when listening to the tenth second of the content data.
(7) The terminal requests data transmission stop to the server.
(8) The server stops the data transmission.
(9) The terminal issues PLAY command, and requests data from the thirtieth second of the news. mp4.
(10) The server transmits, in response to the PLAY command, the message indicating the transmission from the thirtieth second to the end (sixtieth second). After this, the content data from the thirtieth second is transmitted to the terminal.
(11) The terminal prompts the server to finish the communication.
(12) The server finishes the communication.

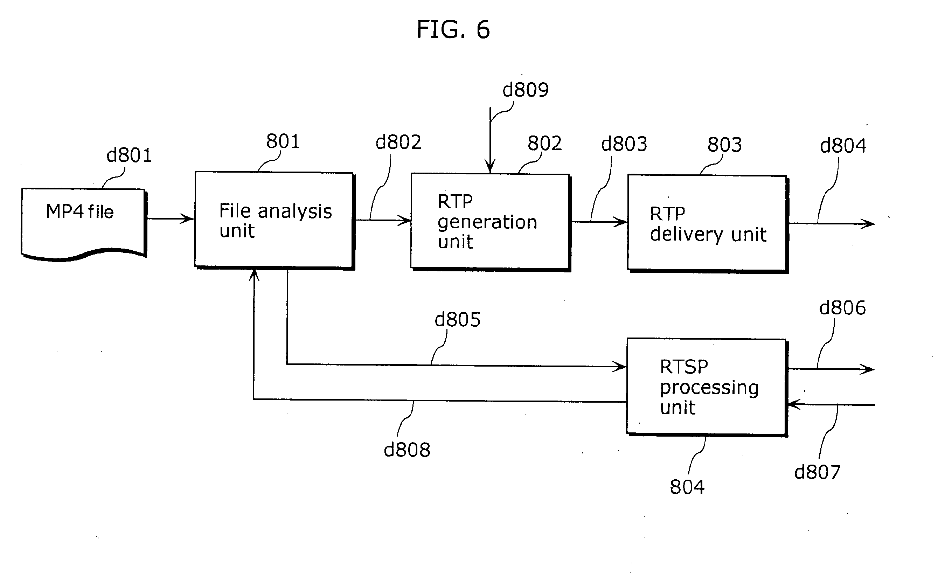

FIG. 6 is a block diagram showing the structure of the conventional data transmission apparatus (server).

The data transmission apparatus includes: a file analysis unit 801; an RTP generation unit 802; an RTP delivery unit 803; and an RTSP processing unit 804.

The RTSP processing unit 804 transmits a transmission message d806 to a data reception apparatus (terminal), and receives a reception message d807 from the data reception apparatus so as to execute reproduction control with the data reception apparatus, using RTSP. The RTSP processing unit 804 analyzes the reception message d807, and outputs, to the file analysis unit 801, an RTSP request data d808 including a file name of an MP4 file, a storage location of the MP4 file, and a display time location of the MP4 file which is required to be transmitted.

The file analysis unit 801 acquires, from a storage apparatus which is not drawn in the drawing, the MP4 file d801 as shown in the RTSP request data d808. Next, the file analysis unit 801 acquires, by analyzing a hint track, a sample associated with the display time location which has been requested to be transmitted. The file analysis unit 801 outputs, to the RTP generation unit 802, the acquired sample as packet generation data d802 along with the information which is necessary for generating a header of an RTP packet. Moreover, the file analysis unit 801 outputs, to the RTSP processing unit 804, RTSP delivery information d805 including SDP and display time information of media data included in a head RTP packet in time of transmission start.

The RTP generation unit 802 acquires: the packet generation data d802 from the file analysis unit 801, and packet header information d809 which is the header information of the RTP packet from an apparatus which is not shown in the drawing. Then, the RTP generation unit 802, based on the packet generation data d802 and packet header information d809, generates an RTP packet d803, and outputs the d803 to the RTP delivery unit 803.

The RTP delivery unit 803 acquires the RTP packet data d803 outputted from the RTP generation unit 802, and transmits the d803 as an RTP packet d804 to the data reception apparatus (terminal).

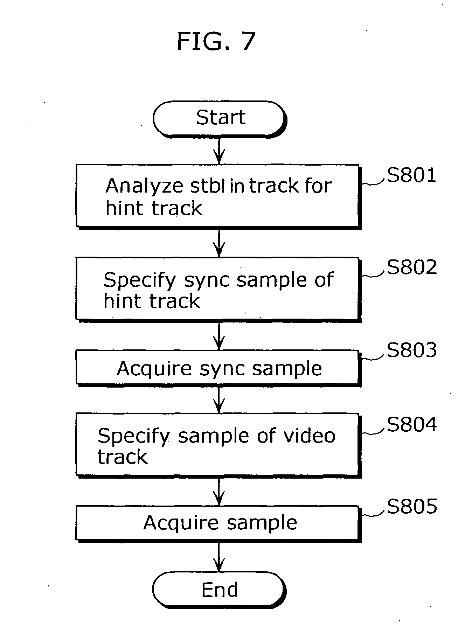

FIG. 7 is a flow chart showing the operation of the file analysis unit 801 of the data transmission apparatus.

Here, the data transmission apparatus RTP packetizes the data of the video track data starting from the part of the data whose display time is T, and transmits the RTP packetized data. Also, the track ID of the video track is 1, and the track ID of the hint track for the video track is 3. In other words, the file analysis unit 801 (i) refers to the hint track whose track ID is 3, (ii) RTP packetizes the video track data whose track ID is 1, and (iii) transmits the RTP packet.

First, the file analysis unit 801 analyzes stss and stts of the track whose track ID is 3 (step S801). After the analysis, the file analysis unit 801 specifies a sync sample whose display time matches T, or is the closest to T before T (step S802). Also, the file analysis unit 801 may specify a sync sample whose display time is closest to T after T. In the case of audio and the like, normally all of the samples are sync samples, thus stss does not exist. In the case where the stss does not exist as described above, the file analysis unit 801 treats all of the samples as sync samples.

Next, the file analysis unit 801 refers to another Box within the stbl, and acquires data of the specified sync sample (step S803).

Moreover, the file analysis unit 801 analyzes the acquired sync sample, and specifies the sample of the video track, whose track ID is 1, which is transmitted by the RTP packet generated by the sync sample (step S804).

Next, the file analysis unit 801 analyzes trak of the track whose track ID is 1, and acquires data of the sample specified as the subject to be RTP packetized in the step S804 (step S805).

Also, in the case where there is a sample of the hint track after the sync sample specified in the step S802, the file analysis unit 801 acquires the sample, and executes the same operations as the steps S804 and S805 based on the sample.

In the above explanation, the procedure in which single media data is acquired has been described. In the case where a plurality of media such as audio and video are handled, the same process is executed on each media. Here, each media track and the corresponding hint track are associated with each other by the track ID.

The data reception apparatus acquires the RTP packet d804 (coded data) which has been outputted from the above mentioned data transmission apparatus. And, while holding the coded data in a memory called buffer, the data reception apparatus decodes the coded data stored in the memory.

Here, the model called a buffer model is standardized. The standardized buffer model assures that when coded data flows in at a predetermined rate, if a buffer of a predetermined size is prepared, decoding can be executed without the buffer becoming empty (under flow) or full (overflow).

The buffer model is specified for each coding method such as MPEG-4, Advanced Video Coding (AVC), and Moving Picture Expert Group Visual (MPEG-4). And, the coded data is coded following the buffer model.

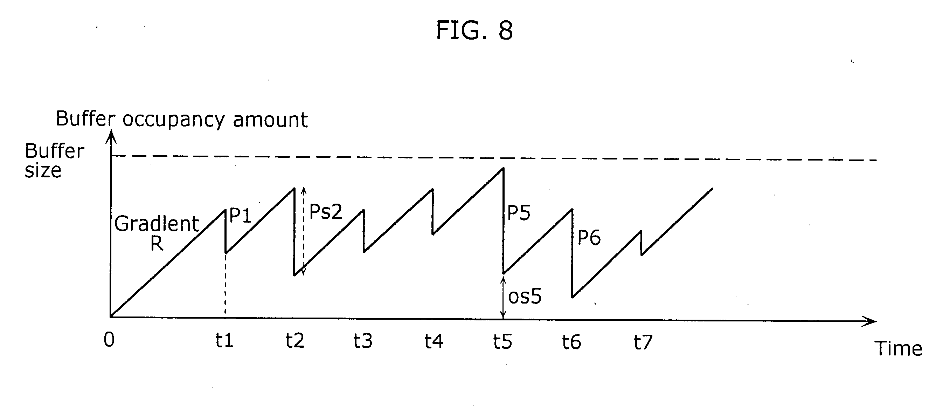

FIG. 8 is a diagram showing a relation between the elapsed time (horizontal axis) from the start of the coded data flow and the occupancy amount (vertical axis) of the buffer of the data reception apparatus.

The buffer occupancy amount is data amount of the coded data which exists in the buffer at a certain time. For example, as shown in FIG. 8, coded data flows into the buffer at the bit rate which has the gradient R. The data reception apparatus starts a decoding process on a picture P1 at the time t1, and decodes the following pictures, respectively at the time of t2, t3... In other words, at the decoding time (t1, t2...) of each picture, the data which corresponds with the picture to be decoded is extracted from the buffer. For example, at the time t2, the data of the picture to be decoded is extracted from the buffer, and the buffer occupancy amount is reduced by the data amount Ps2 of the picture to be decoded.

Here, the time from the start of the coded data flow into the buffer until the start of the decoding is called pre-buffering time. In the case where the operation shown in FIG. 8 is executed by the data reception apparatus, the pre-buffering time is t1. If the data reception apparatus starts decoding by following the pre-buffering time specified in time of coding, based on the buffer model, decoding of the coded data can be continued in the state where the occupancy amount of the buffer does not exceed the buffer size specified by the video coding standard (MPEG-4 and the like), and the data of the pictures to be decoded completely exists at the decoding time of the picture. In other words, as shown in FIG. 8, the buffer occupancy amount is always kept within the range from 0 or more to the buffer size or smaller.

However, according to the conventional data transmission apparatus, information which should be transmitted to the data reception apparatus and is necessary for reproducing the RTP packet d804 lacks, there is a problem that the coded data transmitted by the RTP packet d804 cannot be appropriately reproduced for the data reception apparatus.

In the case where the data reception apparatus starts decoding from the picture (the fifth picture P5) in the middle of the coded data, in order to prevent underflow and overflow of the buffer, after extracting data of the picture P5 from the buffer, the buffer occupancy amount needs to be offset os5. However, since the data reception apparatus always starts decoding after certain elapsed time as the pre-buffering time, there is a case where after the data of the picture P5 is extracted, the buffering occupancy amount may be reduced to less than the offset os5.

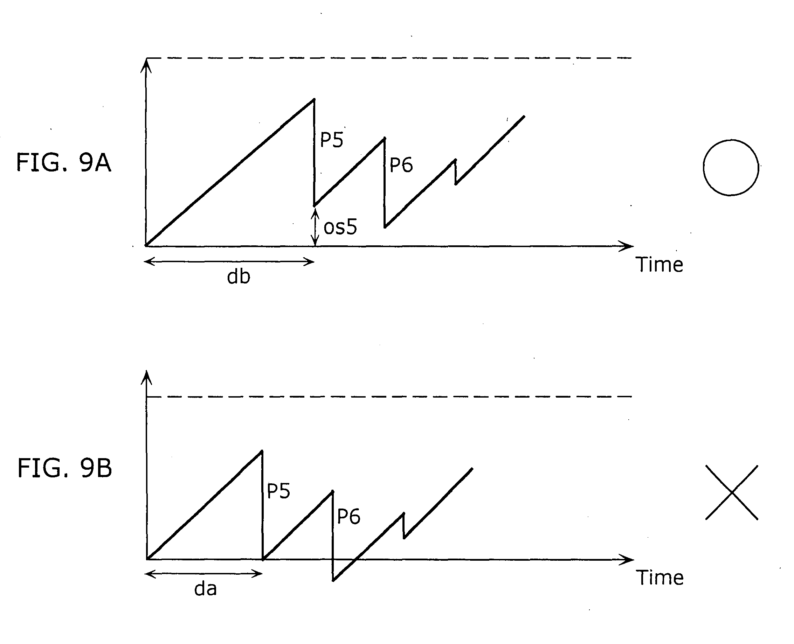

FIG. 9A and FIG. 9B are diagrams showing temporal changes of the buffer occupancy amount which differs depending on the pre-buffering time.

As shown in FIG. 9A, when the data reception apparatus starts decoding the picture P5 after the elapse of the pre-buffering time db, the buffer occupancy amount becomes offset os5, and the pictures after the picture P6 can be normally decoded at the decoding time.

However, as shown in FIG. 9B, when the data reception apparatus starts decoding the picture P5 after the elapse of the pre-buffering time da, the buffer occupancy amount becomes zero. Thus, the data of the picture P6 does not completely exist at the decoding time of the picture P6, and the picture P6 cannot be decoded. Therefore, the data reception apparatus stops the decoding operation and the display until the data of the picture P6 completely exists.

As described above, the appropriate pre-buffering time which prevents overflow and underflow of the buffer differs depending on the picture which is a subject to be started decoding. The data reception apparatus cannot acquire information, such as the appropriate pre-buffering time for each picture, which is necessary for the appropriate reproduction. Thereby, the data reception apparatus stops the picture display while reproducing, and makes the waiting time until the decoding start unnecessarily long.

The object of the present invention, in view of the above mentioned problems, is to provide a data transmission apparatus which causes a data reception apparatus to execute an appropriate reproduction process of content data.

### Disclosure of Invention

In order to achieve the above mentioned object, the data transmission apparatus according to the present invention extracts content data that is a copyrighted digital work from a file, and transmits the content data to a reception apparatus, wherein the file is made up of (i) the content data and (ii) reproduction control information used for a reproduction process of the content data, the content data and the reproduction control information being multiplexed. And, the data transmission apparatus includes: a front end processing unit operable to establish and initialize a transmission path of content data with the reception apparatus; a control transmission unit operable to extract at least a part of the reproduction control information from the file, and transmit the extracted information to the reception apparatus, after the transmission path is established and initialized by said front end processing unit; a packet generation unit operable to acquire at least a part of content data from the file, and packetize the acquired data; and a content transmission unit operable to transmit at least a part of the content data which has been packetized by said packet generation unit.

Thus, after the transmission path is established and initialized by the frot end processing unit, at least a part of the reproduction control information is extracted from the file and transmitted to the reception apparatus. Thereby, when receiving the content data transmitted by the content transmission unit and the reproduction control information transmitted by the control transmission unit, the reception apparatus can appropriately execute the reproduction process on the content data using the reproduction control information.

Also, the reproduction control information which has been multiplexed in the file may be structured in a tabular form, per data unit which is plurally included in the content data, said reproduction control information including reproduction control unit information used for reproducing from the data unit, said control transmission unit may extract, from the reproduction control information of the file, and transmit the reproduction control unit information related to a data unit which is requested by the reception apparatus, and said packet generation unit may acquire and packetize the content data from the data unit requested by the reception apparatus.

Thus, the content data from the data unit which is requested by the reception apparatus is packetized and transmitted, and the reproduction control unit information related to the data unit is also transmitted by the control transmission unit. Therefore, the reception apparatus can appropriately execute the reproduction process on a part of the content data which the reception apparatus requested, from the head data unit included in the part, using the reproduction control unit information.

In addition, the reproduction control unit information may indicate details to inform a timing when a decoding process should be started on the content data, said content data transmitted by said content transmission unit and received by the reception apparatus. For example, the reproduction control unit information may indicate, as the details to inform the timing, a time from a reception start of the content data by the reception apparatus to a start of the decoding process. Otherwise, the reproduction control unit information indicates data amount of the content data stored into the reception apparatus as the details to inform the above mentioned timing.

Thus, in the case where the reception apparatus receives content data and starts storing the received content data into the buffer, by using the reproduction control unit information, the reception apparatus can inform the timing when the decoding process should be started on the content data stored into the buffer. Thereby, the occurrence of the overflow and underflow of the buffer can be prevented, and the reproduction process on the stored content data can be appropriately executed. Also, when the reproduction control unit information indicates time, the reception apparatus can find the above mentioned timing by timing the time from the reception start. When the reproduction control unit information indicates the data amount, the reception apparatus can find the above mentioned timing based on the data amount stored into the buffer.

Moreover, said control transmission unit may convert the data amount indicated by the reproduction control unit information into the time from the reception start of the content data by the reception apparatus to the start of the decoding process, and transmit the converted reproduction control unit information. Here, said control transmission unit converts the reproduction control unit information, according to a transmission state of the content data which is transmitted by said content transmission unit.

Thus, the data amount indicated by the reproduction control unit information is converted into time and informed to the reception apparatus. Thereby, the reception apparatus which cannot apprehend the data amount stored into the buffer can appropriately know the above mentioned timing. Also, in the case where the above mentioned conversion is executed according to the transmission state of the content data, the appropriate time can be informed to the reception apparatus without being affected by the transmission state. For example, when the speed of transmitting the content data decreases, the conversion is executed so as to lengthen the time. As a result, the appropriate time can be informed to the reception apparatus.

Also, the content transmission unit may change the speed of transmitting content data based on the transmission path state.

Thus, the reception apparatus can reproduce the content data in the stable quality.

Also, the content data may be moving picture data structured including a plurality of pictures, and the reproduction control unit information may indicate whether or not a correct result of decoding process can be acquired from a head picture of the data unit. Otherwise, the content data may be moving picture data structured including a plurality of pictures, and the reproduction control unit information may indicate a part where a correct result of decoding process can be first acquired in the case where a decoding process is started from a head picture of the data unit.

Thus, the reception apparatus which has received the content data from the data transmission apparatus can select outputting the content details either from the picture that is decoded incompletely or the picture that is correctly decoded.

In addition, the content data may be moving picture data including a scene made up of a plurality of consecutive pictures as the data unit, and the reproduction control information may indicate information which is necessary for initialization in decoding the plurality of pictures that make up said each scene.

Thus, for example, when the reception apparatus sequentially requests the pictures of different scenes such as clip reproduction, the data transmission apparatus transmits each scene with the reproduction control unit information related to the scene. Therefore, the reception apparatus can appropriately initialize each scene using the reproduction control unit information, and display each picture.

Moreover, the content data may be moving picture data structured including a plurality of pictures, and the reproduction control information may indicate a cycle of pictures which can be randomly accessed among said plurality of pictures.

Thus, the reception apparatus which has received the reproduction control information can specify the part of the content data that can be randomly accessed based on the reproduction control information. And, the reception apparatus can appropriately execute the reproduction process starting from the above mentioned part of the content data.

The present invention can be realized as a data transmission method or a program in which content data is transmitted using the above mentioned data transmission apparatus, and as the storage medium which stores the program.

### Further Information about Technical Background to this Application

The disclosure of Japanese Patent Application No. 2003-083681 filed on March 25, 2003 including specification, drawings and claims is incorporated herein by reference in its entirety.

### Brief Description of Drawings

These and other objects, advantages and features of the invention will become apparent from the following description thereof taken in conjunction with the accompanying drawings that illustrate a specific embodiment of the invention. In the Drawings:
FIG. 1 is a diagram for explaining the structure of the Box of an MP4 file;
FIG. 2 is a data structure diagram showing the structure of an MP4 file;
FIG. 3 is a diagram for explaining the use method of hint data;
FIG. 4 is a diagram for explaining the procedure in which media data (content data) is distributed as an RTP packet from a server to a terminal;
FIG. 5 is a diagram showing an example of an RTSP message which is exchanged in reproduction control between a server and a terminal;
FIG. 6 is a block diagram showing the structure of a conventional data transmission apparatus (server);
FIG. 7 is a flow chart showing the operation of the file analysis unit of the above mentioned data transmission apparatus;
FIG. 8 is a diagram showing a relation between the elapsed time (horizontal axis) from the start of the coded data flow and the buffer occupancy amount (vertical axis) of the data reception apparatus;
FIG. 9A and FIG. 9B are diagrams showing temporal changes of the buffer occupancy amount which differs depending on the pre-buffering time;
FIG. 10 is a block diagram showing the structure of the data transmission apparatus according to the first embodiment of the present invention;
FIG. 11A and FIG. 11B are data details display diagrams showing an example of the content of the pre-buffering information stored into stsp;
FIG. 12A and FIG. 12B are data details display diagrams showing another example of the content of the pre-buffering information stored into stsp;
FIG. 13 is a flow chart showing the operation of the file analysis unit of the data transmission apparatus;
FIG. 14 is a flow chart showing the specific operation of the acquisition process (step S105 in FIG. 13) of the pre-buffering information;
FIG. 15 is a diagram showing an example of the RTSP message exchanged between the data transmission apparatus and data reception apparatus;
FIG. 16 is a block diagram showing the structure of the data reception apparatus according to the second embodiment of the present invention;
FIG. 17 is a flow chart showing the operation of the instruction unit of the above mentioned data transmission apparatus; and
FIG. 18A, FIG. 18B and FIG. 18C are illustration diagrams showing a storage medium which stores a program for realizing the data transmission apparatus and data reception apparatus according to the first or second embodiment, using a computer system.

### Best Mode for Carrying Out the Invention

### (First Embodiment)

The data transmission apparatus according to the first embodiment of the present invention will be explained in reference to the drawings.

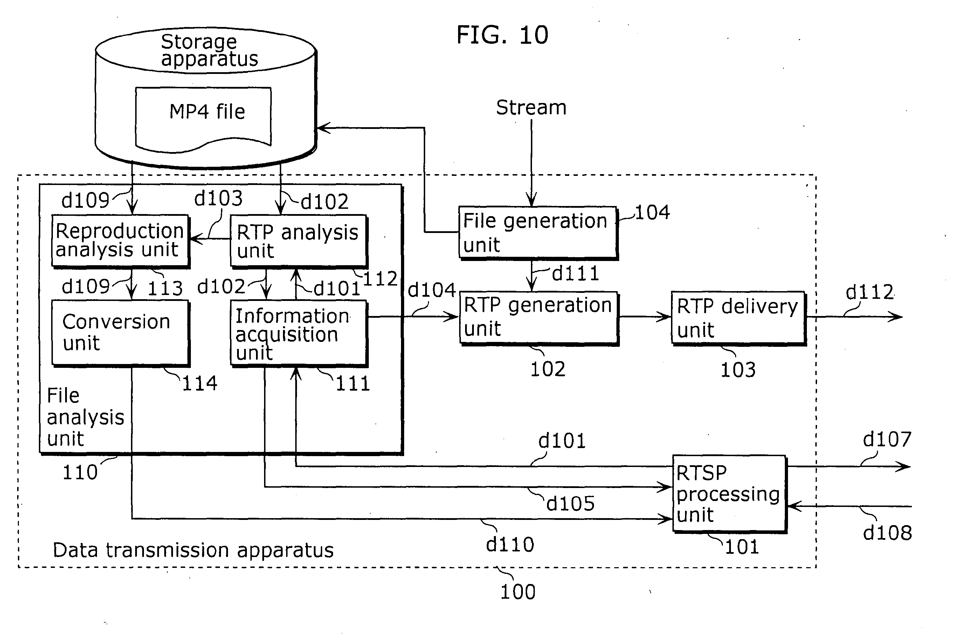

FIG. 10 is a block diagram showing the structure of the data transmission apparatus according to the first embodiment of the present invention.

The data transmission apparatus 100 according to the present embodiment (i) extracts, from an MP4 file, information such as the pre-buffering time (reproduction control information) which is necessary for an appropriate reproduction, (ii) transmits the information to a data reception apparatus, and (iii) causes the data reception apparatus to execute an appropriate reproduction process. The MP4 file used in the present embodiment is made up of (i) media data of audio, video, or text and (ii) hint data, the media data and the hint data being multiplexed. The above mentioned reproduction control information is multiplexed in the header of the hint data. Here, the MP4 file used in the present embodiment contains video data which is coded by the coding method such as MPEG-4 AVC and MPEG-4 Visual, H. 263.

The data transmission apparatus 100 includes: a file analysis unit 110; an RTSP processing unit 101; an RTP generation unit 102; an RTP delivery unit 103; and a file generation unit 104.

The file generation unit 104 (i) acquires a stream of content data, (ii) generates an MP4 file, and (iii) stores the MP4 file into a storage apparatus.

The RTSP processing unit 101 transmits a transmission message d107 to the data reception apparatus, and receives a reception message d108 from the data reception apparatus, so as to execute reproduction control using the RTSP with the data reception apparatus. Here, the transmission message d107 includes at least one of an RTSP delivery information d105 acquired from the file analysis unit 110 and reproduction parameter information d110. The RTSP processing unit 101 analyzes the reception message d108, and outputs, to the file analysis unit 110, an RTSP request data d101 including the file name of the MP4 file, storage location of the MP4 file, and display time location of the MP4 file which is requested to be transmitted.

The file analysis unit 110 analyzes the MP4 file, and generates data which is necessary for generating an RTP packet, and data which is necessary for the RTSP communication. And, the file analysis unit 110 includes: an RTP analysis unit 112; an information acquisition unit 111; a reproduction analysis unit 113; and a conversion unit 114.

The RTP analysis unit 112 acquires RTSP request data d101 via the information acquisition unit 111, and analyzes the hint track of the MP4 file, so as to acquire sample data d102 associated with the RTSP request data d101. Moreover, the RTP analysis unit 112 outputs: the acquired sample data d102 to the information acquisition unit 111, and sample number information d103 including the sample number of the sample which is in the head of the sample data d102 to the reproduction analysis unit 113. The sample number is a number for identifying a sample. For example, sample numbers 1,2,3...are sequentially assigned from the head of the sample, to each sample of the track. Here, the sample number information d103 may include the track ID of the hint track or media track.

The information acquisition unit 111 acquires sample data d102 from the RTP analysis unit 112. The information acquisition unit 111 outputs, to the RTP generation unit 102, the acquired sample data d102 and information which is necessary for generating the header of the RTP packet, as the packet generation data d104. Moreover, the information acquisition unit 111 generates the RTSP delivery information d105 including sequence number, time stamp, SDP, and display time information of media data included in the head in time of transmission start of the RTP packet. And, the information acquisition unit 111 outputs the d105 to the RTSP processing unit 101.

The reproduction analysis unit 113 acquires sample number information d103 from the RTP analysis unit 112. The reproduction analysis unit 113 acquires, from the hint track of the MP4 file, the reproduction control information d109 regarding each sample after the sample of the sample number indicated by the sample number information d103. Then, the reproduction analysis unit 113 outputs the acquired reproduction control information d109 to the conversion unit 114. The reproduction control information d109 is information provided so that the reproduction process from the sample of the sample number indicated by the sample number information d103 can be appropriately executed on the side of the data reception apparatus. For example, the reproduction control information d109 is the pre-buffering information provided so that an appropriate pre-buffering can be executed without causing overflow and underflow in the buffer of the data reception apparatus.

The conversion unit 114 (i) converts the reproduction control information d109 acquired from the reproduction analysis unit 113 into the RTSP parameters, (ii) generates the reproduction parameter information d110, and (iii) outputs the d110 to the RTSP processing unit 101.

The RTP generation unit 102 acquires: the packet generation data d104 from the file analysis unit 110, and the packet header information d111 which is header information of the RTP packet from an apparatus which is not shown in the drawing. Here, the packet header information d111 includes the initial value of the sequence number and the like. Then, the RTP generation unit 102 generates the RTP packet d112 based on the packet generation data d104 and the packet header information d111.

The RTP delivery unit 103 transmits the RTP packet d112 generated in the RTP generation unit 102 to the data reception apparatus.

For example, when requested, from the data reception apparatus, to transmit data in mid course of a video, the data transmission apparatus 100 according to the present embodiment refers to stss for hint track. Then, the data transmission apparatus 100 specifies the most appropriate sample for the request of the data reception apparatus among the sync samples of the hint track, and generates and transmits the RTP packet of video data based on the sample after the specified sample. In the case where the data (RTP packet) from the part of the display time T is requested from the data reception apparatus, the data transmission apparatus 100 specifies a sync sample of the hint track whose display time is equal to T or the closest to T before T. Here, the data transmission apparatus 100 may specify a sync sample whose display time is closest to T after T.

When the data transmission apparatus 100 according to the present embodiment generates one or more RTP packets based on the sync sample of the hint track, the data transmission apparatus 100 transmits the reproduction parameter information d110 for the sample of the video track which is first transmitted by the head RTO packet, as the transmission message d107, to the data reception apparatus. The data reception apparatus which received the RTP packet from the above mentioned data transmission apparatus 100 can execute an appropriate reproduction on the received RTP packet, based on the reproduction parameter information d110 (reproduction control information d109).

Here, the structure of the MP4 file handled by the data transmission apparatus 100 according to the present embodiment will be explained.

The MP4 file includes pre-buffering information as reproduction control information. The reproduction control information is information provided so that the reproduction process from each sample can be appropriately executed by the data reception apparatus. The pre-buffering information is information provided so that the pre-buffering from each sample can be appropriately executed, and is stored as a table structure into SyncSample To Prebuf Box (stsp) arranged under the stbl of the trak for hint track. Specifically, depending on each sample (picture), the pre-buffering information indicates the time (necessary time for pre-buffering) which is necessary for the pre-buffering from the reception start to the decoding start or the data amount (necessary data amount for pre-buffering) which is necessary for the pre-buffering from the reception start to the decoding start.

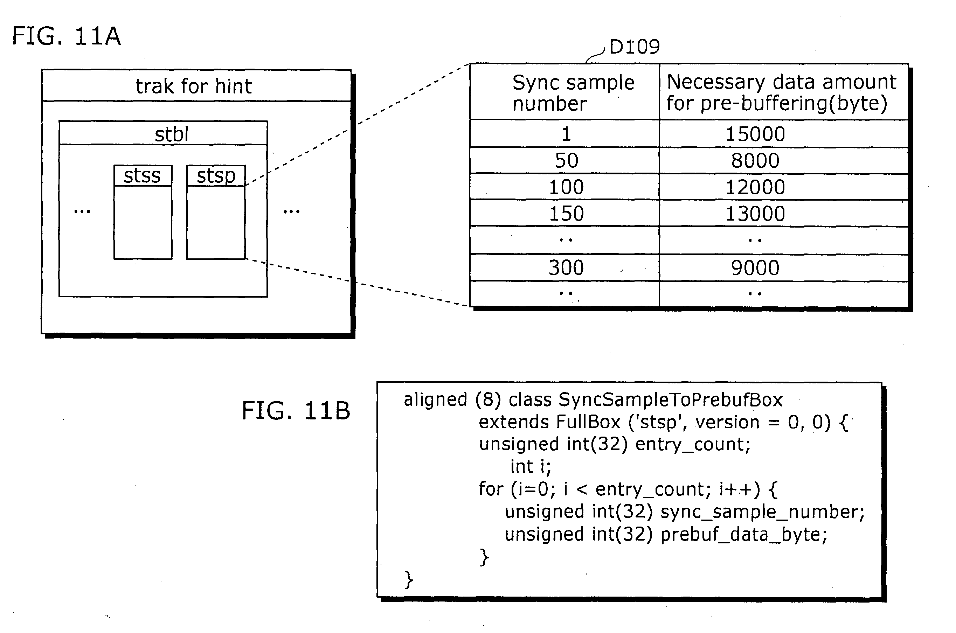

FIG. 11A and FIG. 11B are data details display diagrams showing an example of the content of the pre-buffering information stored into the stsp.

As shown in FIG. 11A, the pre-buffering information D109 includes: the sample number (sync sample number) of the sync sample of the hint track, and necessary data amount for pre-buffering associated with the sync sample of the sample number. In the case where the data reception apparatus starts reception from the RTP packet generated, based on the sync sample, which is associated with the necessary data for pre-buffering, the necessary data for pre-buffering indicates data amount which needs to be stored in the buffer of the data reception apparatus from the reception start to the decoding start.

For example, when the data reception apparatus starts reception from the RTP packet d112 generated based on the sync sample, the data reception apparatus starts decoding after receiving the RTP packet d112 up to 15000 bytes. The necessary data amount for pre-buffering may be the coded data amount of the video and audio included in the packet so that the necessary data amount for pre-buffering does not depend on the transmission protocol such as RTP.

FIG. 11B is a diagram showing an example of syntax of the stsp which stores the above-mentioned pre-buffering information D109. The "sync_sample_number" in FIG. 11B indicates the sample number of the sync sample, and "prebuf_data_byte" indicates the necessary data amount for pre-buffering.

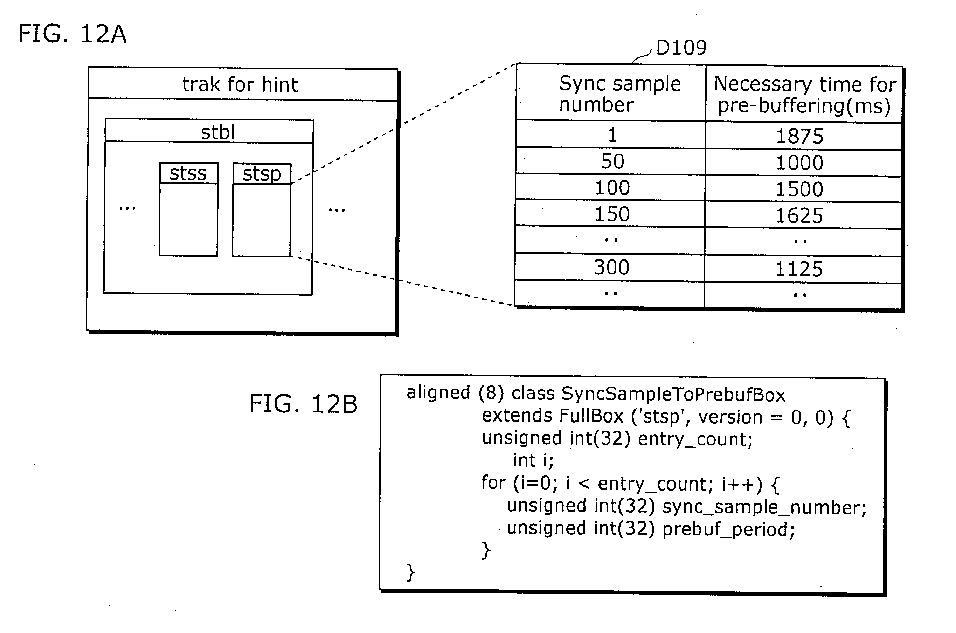

FIG. 12A and FIG. 12B are data details display diagrams showing another example of the details of the pre-buffering information stored into the stsp.

As shown in FIG. 12A, the pre-buffering information D109 includes: the sample number (sync sample number) of the sync sample of the hint trak, and the necessary time for pre-buffering which is associated with the sync sample of the sample number.

For example, when the data reception apparatus starts reception from the RTP packet d112 generated based on the sync sample of the sample number 1, the data reception apparatus starts decoding the RTP packet d112 after 1.875(s) elapsed from the reception start. In other words, in the case where the transmission rate is 64000 (bps), when the data of 64000x1.875/8=15000bytes is stored in the buffer, the data reception apparatus starts decoding the RTP packet d112.

FIG. 12B is a diagram showing an example of syntax of the stsp which stores the above-mentioned pre-buffering information D109. The "sync_sample_number" in FIG. 12B indicates the sample number of the sync sample, and "prebuf_period" indicates the necessary time for pre-buffering.

As long as the pre-buffering information of the sync sample can be indicated, the pre-buffering information can be stored into the MP4 file using another method. For example, in the same way as that the index number of the sample entry to which the sample refers is indicated using Sample to Chuck Box ('stsc'), the pre-buffering information is stored as the entry of the table data in the Box within the stbl, and the sync sample and the index number of the entry can be associated with each other.

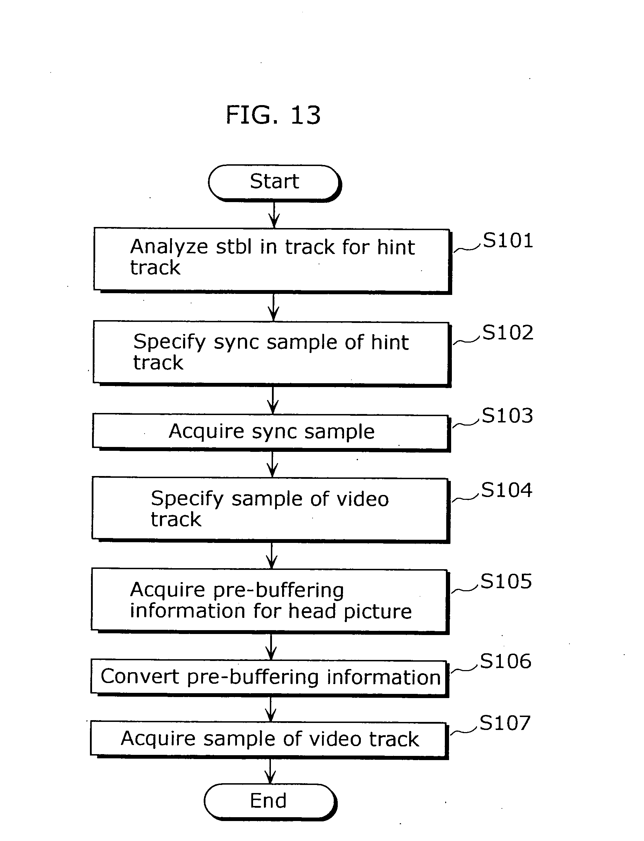

FIG. 13 is a flow chart showing the operation of the file analysis unit 110 of the data transmission apparatus 100. Hereinafter, the reproduction control information d109 will be explained as the pre-buffering information.

Here, the data transmission apparatus 100 RTP packetizes the data of the video track starting from the part of the data whose display time is T so as to transmit the RTP packetized data. Also, the track ID of the video track is 1, and the track ID of the hint track for the video track is 3. In other words, the file analysis unit 110 (i) refers to the hint track whose track ID is 3, (ii) RTP packetizes the data of the video track whose track ID is 1, and (iii) transmits the data. Here, the video data will be explained, but the pre-buffering information may be used for audio or text data.

First, the file analysis unit 110 analyzes the stbl (stss and stts) of the track (hint track) whose track ID is 3 (step S101). After the analysis, the file analysis unit 110 specifies the sync sample whose display time corresponds with T or is the closest to T before T (step S102). Next, the file analysis unit 110 refers to another Box in the stbl, and acquires data of the specified sync sample (step S103). Moreover, the file analysis unit 110 analyzes the acquired sync sample so as to specify the sample of the video track, whose track ID is 1, transmitted by the RTP packet which is generated by the sync sample (step S104).

Next, the file analysis unit 110 refers to the stsp of the hint track whose track ID is 3 so as to acquire the pre-buffering information d109, for the head RTP packet (picture), which is RTP packetized based on the sync sample (track ID=3) specified in the step S103 (step S105).

The file analysis unit 110 which acquired the pre-buffering information d109 converts the pre-buffering information d109 into the RTSP parameters, and generates the reproduction parameter information d110 (step S106).

After that, the file analysis unit 110 analyzes trak of the video track whose track ID is 1, and acquires the sample specified as a subject to be RTP packetized in the step S104 (step S107).

Also, the file analysis unit 110 acquires data of the sample of the hint track after the sync sample specified in the step S102, and executes the same operations as the steps S104 and S107.

The data transmission apparatus 100 may execute the acquisition process (step S105) of the pre-buffering information before the sync sample acquisition (step S103) and after the sample acquisition of the video track (step S107).

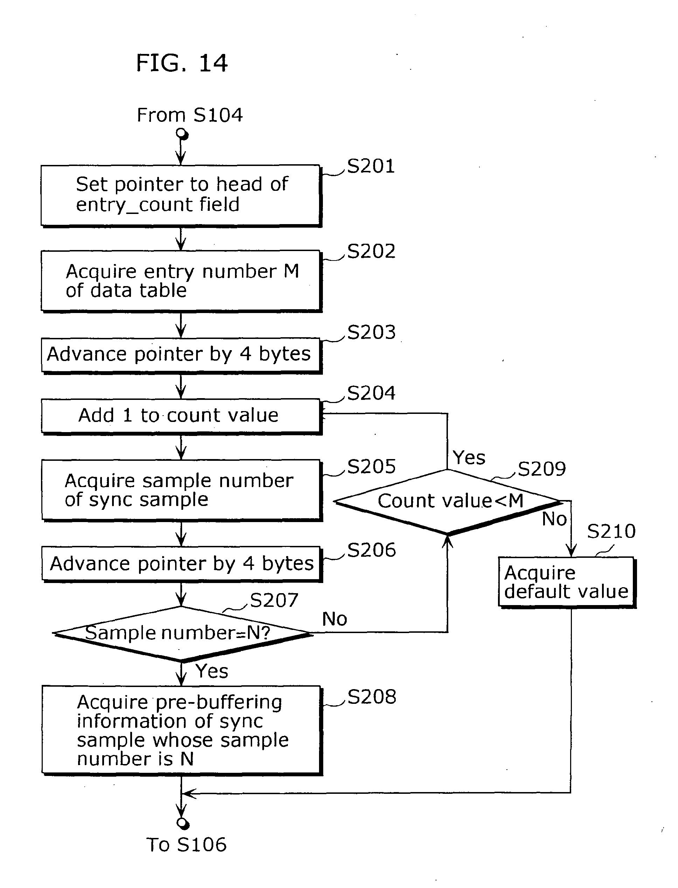

FIG. 14 is a flow chart showing the specific operation of the acquisition process of the pre-buffering information (step S105 in FIG. 13).

It is assumed that the stsp is displayed in syntax as shown in FIG. 11B, the sample number of the sync sample of the hint track specified in the step S103 in FIG. 13 is N.

First, the file analysis unit 110 sets: the pointer for reading out data to the head of the "entry_count" field of stsp, and the count value to 0 (step S201).

Next, the file analysis unit 110 acquires the entry number M included in stsp (step S202), and advances the pointer by 4 bytes (step S203).

After that, the file analysis unit 110 adds 1 to the count value (step S204), and acquires the sample number (sync_number) of the sync sample (step S205). The file analysis unit 110 further advances the pointer by 4 bytes (step S206).

The file analysis unit 110 judges whether or not the sample number (sync_number) of the sync sample acquired from the step S105 is equal to N or not (step S207). If the sample number is equal to N (Yes in the step S207), the file analysis unit 110 acquires the pre-buffering information d109 associated with the sync sample whose sample number is N (step S208). If the sample number is not equal to N (No in the step S207), the file analysis unit 110 judges whether or not the count value is smaller than the entry number M (step S209). Here, if the count value is smaller than the entry number M (Yes in the step S209), the file analysis unit 110 repeatedly executes the processes from the step S204 to the step S207. On the other hand, if the count value is the entry number M or more (No in the step S209), the file analysis unit 110 cannot acquire the pre-buffering information d109 associated with the sync sample of the sample number N. And, the file analysis unit 110 acquires the predetermined default value, and uses the default value as the pre-buffering information d109 (step S210).

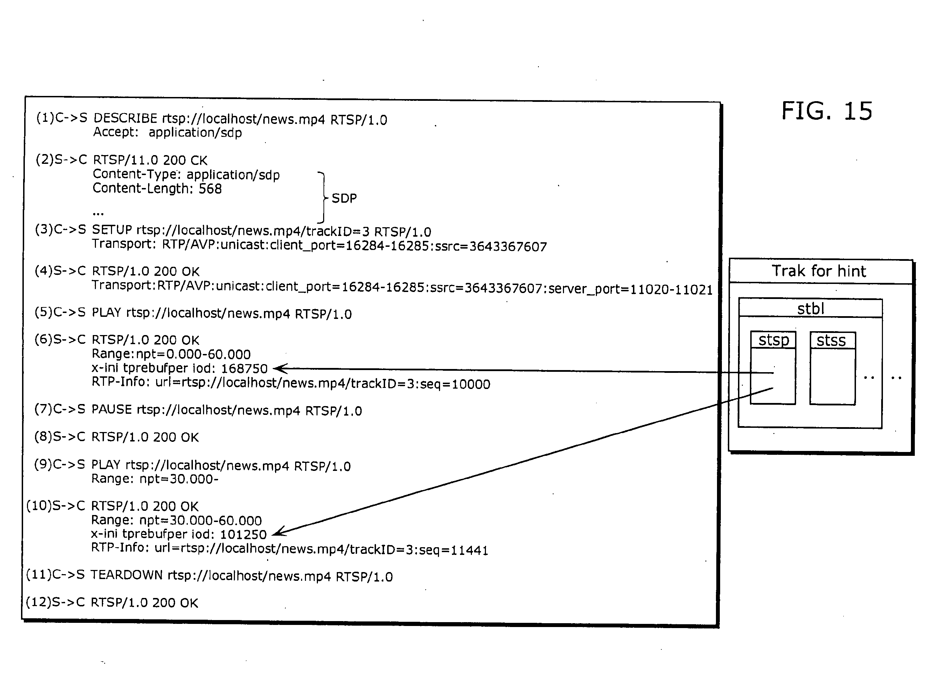

FIG. 15 is a diagram showing an example of the RTSP message exchanged between the data transmission apparatus 100 and data reception apparatus according to the present embodiment.

As show in (1) to (5), after the transmission path to the data reception apparatus is established and initialized, the data transmission apparatus 100 converts the pre-buffering information d109 into the reproduction parameter information d110, and transmits, to the data reception apparatus, the d110 as the response to the PLAY command of the RTSP. For example, as shown in FIG. 15, the data transmission apparatus 100 converts the pre-buffering information d109 indicating the necessary time for pre-buffering into the reproduction parameter information d110 such as "x-initprebufperiod" specified by the "3GPP TS 26.234 standard". And, the data transmission apparatus 100 transmits the reproduction parameter information d110 included in the transmission message d107.

The reproduction parameter information d110 transmitted in (6) in FIG. 15 will be specifically explained.

For example, in the case where the pre-buffering information D109 as shown in FIG. 11A is stored in the stsp, the data transmission apparatus 100 acquires "necessary data amount for pre-buffering 15000 bytes" as the pre-buffering information d109 associated with the sync sample whose sample number is 1. When the transmission rate of the RTP packet is 64000bps and the time scale is 90000, the data transmission apparatus 100 converts the acquired pre-buffering information d109 into the reproduction parameter information d110 (x-initprebufperiod) which is 90000x15000x8/64000=168750.

The reproduction parameter information d110 transmitted in (10) in FIG. 15 will be specifically explained.

For example, in the case where the data transmission apparatus 100 starts transmitting from the sample whose display time of the video track is located at 30 seconds, the data transmission apparatus 100 acquires "necessary data amount for pre-buffering 9000" as the pre-buffering information d109 associated with the sync sample whose sample number is 300. When the transmission rate of the RTP packet is 64000bps and the time scale is 90000, the data transmission apparatus 100 converts the acquired pre-buffering information d109 into the reproduction parameter information d110 (x-initprebufepriod) which is 90000x9000x8/64000=101250.

In the example shown in FIG. 15, the data transmission apparatus 100 transmits the reproduction parameter information d110 (pre-buffering information) as the response to the PLAY command. However, in the case where the RTP packet transmission is started from the head of the content (for example, video), the reproduction parameter information d110 may be stored into SDP and transmitted. Also, the data transmission apparatus 100 may transmit the reproduction parameter information d110 not as the response to the PLAY command, but as the response to another command of the RTSP standard or a newly generated command.

Here, as described above, in the case where the data transmission apparatus 100 uses the default value in stead of acquiring the pre-buffering information from the stsp, the default value indicates, for example, the data amount which is equivalent to two-thirds of the buffer size, as the necessary data amount for pre-buffering.

For example, in the case of the MPEG-4 Visual, when the pre-buffering information is not shown within the Video Object Layer (VOL), it is specified that the coded video data which is equivalent to two-thirds of the standardized buffer size should be pre-buffered, then decoding should be started. Thus, the data transmission apparatus 100 uses the data amount which is equivalent to the two-thirds of the buffer size as the default value.

As described above, the data transmission apparatus 100 according to the present embodiment converts the pre-buffering information d109 into the reproduction parameter information d110, and transmits the d110 to the data transmission apparatus. Thus, the data reception apparatus can specify the appropriate starting time for decoding the RTP packet, based on the converted pre-buffering information d109. As a result, the data transmission apparatus can incessantly reproduce, for example, video data transmitted from the data transmission apparatus 100 using the RTP.

Here, the operation of the file generation unit 104 will be specifically explained referring to each case of MPEG-4 AVC and MPEG-4 Visual.

In MPEG-4 AVC, supplementary information for decoding, called Supplemental Enhancement Information (SEI), can be inputted into the stream of video data. The SEI is not directly necessary for decoding, but is useful for decoding. For example, the SEI can indicate information regarding necessary time for pre-buffering and random access.

In particular, the SEI indicating the pre-buffering information is called Buffering period SEI, the time length from the time when data of the picture just after the Buffering period SEI starts flowing into the decoding buffer of the MPEG-4 AVC to the time when the decoding of the picture is started is stored.

In other words, the file generation unit 104 refers to the Buffering period SEI included in the stream, and generates the above-mentioned MP4 file including the stsp.

For example, the case where the Buffering period SEI indicates 1 second as the time length until the decoding start of the picture N, and the rate which is the standard for calculating the decoding start is 64000bps will be explained.

In such case as described above, after the video data of the MPEG-4 AVC which is 64000x1/8=8000 bytes is received, decoding of the picture M is started. Here, the number of the RTP packet(s) necessary for transmitting video data of 8000 bytes is determined when the hint track of the MP4 file is generated. Thus, the file generation unit 104 adds the summation of the RTP packet header size to 8000 bytes. Then, the file generation unit 104 stores the addition result as the necessary data amount for pre-buffering (pre-buffering information) into the stsp. For example, in the case where the video data of 8000 bytes is transmitted using 20 RTP packets, and the header size of the RTP packet is 12 bytes, the summation of the header size of the RTP packet is 12x20=240 bytes. As a result, 8000+240=8240 bytes is the necessary data amount for pre-buffering.

In the case where the Buffering period SEI is not used for the stream of the video data of MPEG-4 AVC, the file generation unit 104 acquires the pre-buffering information of the picture separately from the stream. Otherwise, the file generation unit 104 calculates the pre-buffering information from the size and the decoding time of each picture included in the stream.

On the other hand, in the MPEG-4 Visual, the parameters in the Video Object Layer (VOL) of the video data stream show the buffer occupancy amount just before the Video Object Plane (VOP) data just after the VOL is extracted from the buffer. In other words, the buffer occupancy amount indicates the necessary data amount for pre-buffering. Here, if the VOL is placed before the picture which can be randomly accessed, the file generation unit 104 calculates the necessary data amount for pre-buffering (pre-buffering information) for the picture just after the VOL based on the parameters in the VOL.

As described above, the data transmission apparatus 100 according to the present invention has been explained using the above mentioned embodiment. However, the data transmission apparatus 100 according to the present invention is not limited to this.

For example, according to the present embodiment, as shown in FIG. 12, only the pre-buffering information indicating the necessary time for pre-buffering is included in stsp. However, there is a case where the transmission rate changes, thus the transmission rate which is a standard for calculating the necessary time for pre-buffering may be stored into the stsp. Also, the transmission rate may be stored into another location of the MP4 file.

In the case where the packet data such as the RTP packet is transmitted via a network, the transmission rate in the network is not always constant, and fluctuation occurs. For example, even if the data transmission apparatus 100 transmits the RTP packet at the transmission rate of 64000 bps, when the network is crowded, the transmission rate may fall down to 60000 bps.

In the case where the necessary time for pre-buffering is set as 1 second, even if the necessary data amount for pre-buffering is 64000 bits, the data reception apparatus which has received the RTP packet under the above mentioned state starts decoding when the buffer occupancy amount reaches 60000 bits.

Therefore, if the transmission rate is stored into the stsp as described above, the data transmission apparatus 100 transmits the transmission rate to the data reception apparatus so as to cause the data reception apparatus to specify the appropriate necessary time for pre-buffering.

Also, according to the present embodiment, the field of sync sample number is set in the stsp. However, this may be omitted.

In addition, according to the present embodiment, the transmission rate of the RTP packet is set as constant. However, in the case where the state of the transmission path such as the network congestion, and the occurrence frequency of packet loss changes in the middle of the content transmission, the transmission rate of the RTP packet may be actively changed according to the state change. In such case as described above, the data transmission apparatus 100 acquires the necessary data amount for pre-buffering from the pre-buffering information D109 stored into the stsp, and calculates the necessary time for pre-buffering according to the transmission rate in time of transmission.

For example, when the data transmission apparatus 100 acquires "necessary data amount for pre-buffering 15000 bytes" as the pre-buffering information d109 for the video data required by the PLAY command, the data transmission apparatus 100 judges that the necessary time for pre-buffering is 15000x8/64000=1.875seconds, based on the transmission rate 64000bps. However, since the network is crowded, the data transmission apparatus 100 voluntarily or inevitably changes the transmission rate to 60000 bps when starting transmission of video data required by the PLAY command. Thus, the data transmission apparatus 100 modifies the above mentioned judgment as that the necessary time for pre-buffering is 15000x8/60000=2.0 seconds. Then, the data transmission apparatus 100 converts, as the response to the PLAY command, the pre-buffering information d109 indicating "necessary time for pre-buffering, 2.0 seconds" into the reproduction parameter information d110, and transmits the d110 to the data reception apparatus.

However, when the packet loss occurs in the transmission path, there is a case where the overflow and underflow of the buffer on the side of the data reception apparatus cannot be prevented simply by changing the necessary time for pre-buffering to be transmitted to the data reception apparatus as described above.

For example, although N (N is a natural number) number of RTP packets are necessary in time of the decoding start, due to the packet loss occurrence, there is a case where the data reception apparatus receives only the (N-2) number of RTP packets within the necessary time for pre-buffering notified by the data transmission apparatus 100. Here, if the data reception apparatus starts decoding when the necessary time for pre-buffering has passed, the (N-1)th and Nth RTP packet lack, and underflow of the buffer occurs.

Thus, the data transmission apparatus 100 may transmit, to the data reception apparatus, the information for specifying the RTP packet which needs to be received by the decoding start, for example, a sequence number, as the pre-buffering information d109. The identification number of the packet, called the sequence number is included in the header of the RTP packet. The sequence number included in the header of the RTP packet is the value which is an addition of 1 and the sequence number included in the header of the just before RTP packet which has been transmitted by the data transmission apparatus. In the case where the first to the Nth RTP packets need to be received by the decoding start, assuming that the sequence numbers of the above mentioned RTP packets are 1 to N, the data transmission apparatus 100 transmits, to the data reception apparatus, the information indicating the sequence numbers 1 to N, as the pre-buffering information d109.

Also, according to the present embodiment, the pre-buffering information D109 is included as the reproduction control information in the hint track (trak for hint track) of the MP4 file. However, the following information may be included as well: the information indicating the waiting time from finishing the picture decoding until displaying the picture; the buffer size which is necessary when decoding the specific interval of the content; and the information regarding the encryption in time of transmission. Moreover, in the case where the coded data is interleaved and transmitted in the RTP packet, the significant information for the data reception, decoding and display in the data reception apparatus, such as (i) the information indicating the depth of the interleave, (ii) the necessary time from the reception start of one-picture data until the reception end, or the information regarding the delay time caused by the interleave such as the difference value between the reception start time and the decoding time, and (iii) the information indicating the size of the buffer which is necessary for receiving and restructuring the coded data which has been interleaved and RTP packetized so as to separate the data per one picture, may be included as the reproduction control information. In such case as described above, the data transmission apparatus 100 acquires the above mentioned reproduction control information from the trak of the MP4 file, and converts the reproduction control information into the reproduction parameter information d110 so as to transmit the d110 to the data reception apparatus.

Also, the scene initialization information which is necessary for initializing the decoding process of the video data, per scene which is made up of a plurality of consecutive pictures may be (i) associated with the information for identifying the scene such as the index number of the scene or the sample number of the head sample of the scene, and (ii) included as the reproduction control information in the MP4 file. In the MPEG-4 AVC, the Sequence Parameter Set and the Picture Parameter Set correspond with the scene initialization information. In such case as described above, for example, when the data reception apparatus sequentially requires the pictures of different scenes such as the clip reproduction, the data transmission apparatus 100 transmits the requested picture data of each scene as the RTP packet, along with the related scene initialization information included in the PLAY response and the like of the RTSP, the data reception apparatus can appropriately initialize each scene using the scene initialization information, so as to decode and display each picture. The scene initialization information for the head scene where the reception is started can be included in the SDP, thus need not be included in the PLAY response.

In addition, the picture cycle information indicating the cycle of the pictures, which can be randomly accessed, included in the video data may be included as the reproduction control information in the MP4 file. In such case as described above, the data reception apparatus which has received the picture cycle information can specify the parts of the video data which can be randomly accessed, based on the picture cycle information, and appropriately execute the reproduction process from the above mentioned parts. For example, the data reception apparatus can judge whether or not the picture located at the time of 30 seconds ahead can be randomly accessed, based on the specified result, and avoid randomly accessing the picture located at the time of 5 minutes ahead.

Also, according to the present embodiment, the pre-buffering information d109 (reproduction parameter information d110) is transmitted to the data reception apparatus using the RTSP. However, the protocol other than the RTSP may be used for transmission.

In addition, according to the present embodiment, the pre-buffering information D109 associated with the video is stored into the stsp. However, content (media) other than the video, such as the pre-buffering information associated with audio and text may be stored.

Moreover, according to the present embodiment, the stsp is used for multiplexing the pre-buffering information D109 to the MP4 file. The above mentioned stsp is also used in the case where the information for generating the packet in the transmission method other than the RTP such as MPEG-2 Transport Stream (TS) is multiplexed in the MP4 file.

According to the present embodiment, only the pre-buffering information for the sync sample indicated by the stss is stored into the stsp, but the pre-buffering information for the other samples may be stored, as well. For example, the sample other than the sync sample which stores the I picture, or the pre-buffering information for all the samples may be stored into the stsp. Also, the pre-buffering information for the sample which stores the I picture to which Recovery Point SEI is added may be stored into the stsp.

The reproduction control information such as the pre-buffering information may be stored into the header information of the video track. For example, by defining the Box such as the stsp for the video track, the pre-buffering information regarding the sync sample of the video track can be included in the Box. Specifically, the sample of the video track referred to by the sync sample of the hint track is a sync sample or a sample other than the sync sample, both of which can be randomly accessed. Thus, the pre-buffering information for the sample of the video track is stored into the header information of the video track. In the MPEG-4 AVC, the pre-buffering information for the sample including the Recovery Point SEI may be stored into the header information.

Here, the above mentioned Recovery Point SEI will be explained.

In the MPEG-4 AVC, the sync sample indicated by the stss indicates the Instantaneous Decoder Refresh (IDR) picture. The IDR picture is a picture which has a characteristic that the picture(s) after the IDR picture in the decoding order can be decoded without referring to the picture(s) before the IDR picture in the decoding order. And, the IDR picture has the same characteristic as the head I picture of the closed GOP in the MPEG-2. In the MPEG-4 AVC, there are pictures which can be randomly accessed other than the IDR picture, and such pictures can be identified by the above mentioned Recovery Point SEI.

The Recovery Point SEI includes: information indicating how many number of pictures should be decoded so as to acquire the picture of the same quality as the original picture, when the decoding is started from the picture just after the SEI; or the identifying information of broken links. In other words, the I picture to which the Recovery Point SEI is added has the same characteristic as the head I picture of the open-GOP in the MPEG-2. Thus, as described above, the pre-buffering information for the sample of the I picture to which the Recovery Point SEI is added may be stored into the stsp.

Moreover, the data transmission apparatus 100 may treat the information indicated by the above mentioned Recovery Point SEI as the reproduction control information. Thus, the data reception apparatus which has received video data from the I picture to which the Recovery Point SEI is added can select whether to display an incomplete decoded picture or to start displaying when a correct decoded picture can be acquired, based on the reproduction control information which has been acquired just before the above mentioned reception. And, the data reception apparatus can acquire the number of the pictures that need to be decoded in advance so as to display from the correct decoded picture.

Furthermore, according to the present embodiment, the pre-buffering information D109 is stored into the stsp of the trak of the MP4 file. However, the pre-buffering information D109 may be stored as the SDP data just under the trak or the moov. Also, the definition of the sample in the hint track may be extended, and the pre-buffering information D109 may be stored as the sample of the hint track into the mdat.

### (Second Embodiment)

The data reception apparatus according to the second embodiment of the present invention will be explained in reference to the drawings.

The data reception apparatus according to the present embodiment appropriately reproduces media (content) data using the reproduction control information (reproduction parameter information) received, based on the RTSP, from the data transmission apparatus 100 according to the first embodiment.

The video data which the data reception apparatus receives as media data may be data coded by the MPEG-4 AVC or the video data of the other coding method such as the MPEG-4 Visual or H. 263.

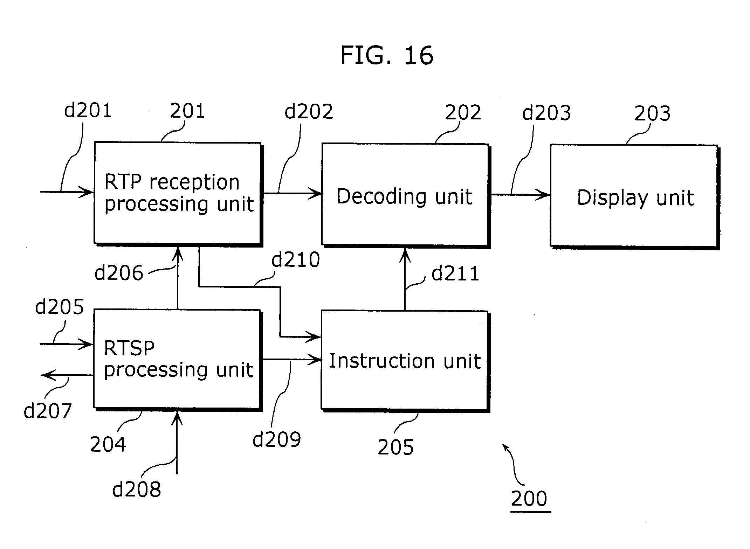

FIG. 16 is a block diagram showing the structure of the data reception apparatus according to the present embodiment.

The data reception apparatus 200 includes: an RTP reception processing unit 201; a decoding unit 202; a display unit 203; an RTSP processing unit 204; and an instruction unit 205.

The RTSP processing unit 204 receives a reception message d205 including the reproduction parameter information from the data transmission apparatus 100. And, the RTSP processing unit 204 transmits a transmission message d207 to the data transmission apparatus 100 so as to execute reproduction control, using the RTSP, with the data transmission apparatus 100. Here, the following explanation assumes that the reproduction parameter information indicates the pre-buffering information.

When the RTSP processing unit 204 acquires the pre-buffering information included in the reception message d205, the RTSP processing unit 204 specifies the necessary time for pre-buffering based on the pre-buffering information. For example, when the RTP packet is received by the RTP reception processing unit 201, the RTSP processing unit 204 judges that decoding should be started only when the necessary time for pre-buffering specified based on the pre-buffering information has passed since the reception start.

Also, the RTSP processing unit 204 outputs: RTP control data d206 including synchronization information of the RTP packet per media (content) to the RTP reception processing unit 201; and decoding start information d209 including the necessary time for pre-buffering to the instruction unit 205.

Moreover, the RTSP processing unit 204 acquires outside command d208. The outside command d208 is information generated by the user's operation of the data reception apparatus 200, and indicates details for instructing: start and end of content reception, pause of the content reception, jump to a specified time location in the content and the like.

The RTP reception processing unit 201 receives the RTP packet d201. Then, after acquiring, for example, the coded data d202 of the video from the RTP packet d201, the RTP reception processing unit 201 outputs the coded data d202 to the decoding unit 202. The RTP reception processing unit 201 instantly executes the process from the reception of the RTP packet d201 to the output of the coded data d202. Also, the RTP packet which is a subject to be started decoding is determined based on the RTP control data d206.

The RTP reception processing unit 201 outputs the reception start signal d210 to the instruction unit 205 when starting the reception of the RTP packet d201.

The instruction unit 205 determines the timing to start decoding based on the reception start signal d210 and the decoding start information d209, and outputs the start instruction signal d211 for instructing the decoding start to the decoding unit 202.

When the decoding unit 202 acquires the start instruction signal d211 from the instruction unit 205, the decoding unit 202 starts decoding the coded data d202, and outputs the decoded data d203 to the display unit 203.

In other words, when the necessary time for pre-buffering has elapsed since the RTP reception processing unit 201 received the RTP packet d201, the decoding unit 202 according to the present embodiment starts the decoding process.

When the display unit 203 acquires the decoded data d203 from the decoding unit 202, the display unit 203 displays the content of the decoded data d203.

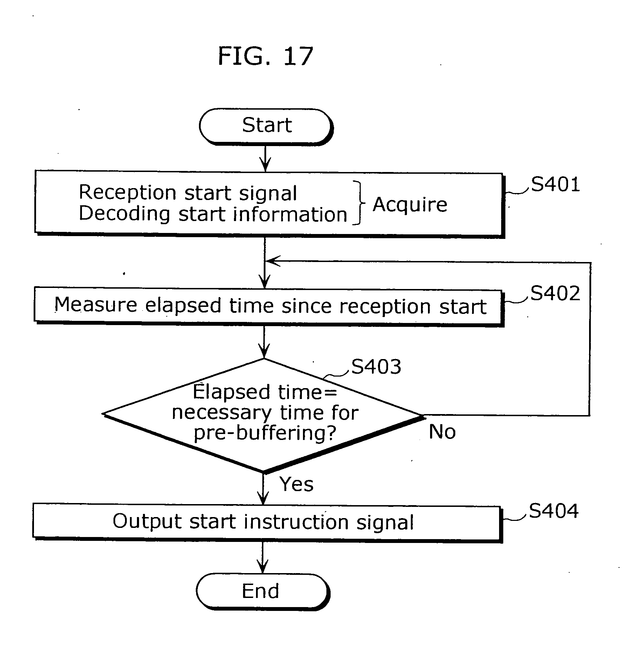

FIG. 17 is a flow chart showing the operation of the instruction unit 205 of the data reception apparatus 200 according to the present embodiment.

First, the instruction unit 205 acquires the reception start signal d210 from the RTP reception processing unit 201, and the decoding start information d209 from the RTSP processing unit 204 (step S401). For example, the reception start signal d210 indicates that the reception of the RTP packet d201 regarding the video track whose track ID is 1 has been started.

The instruction unit 205 measures the elapsed time since the reception of the RTP packet d201 is started, using the reception of the reception start signal d210 as the trigger (step S402).

Next, the instruction unit 205 judges whether or not the elapsed time measured in the step S402 is equal to the necessary time for the pre-buffering included in the decoding start information d209 (step S403). For example, the case where the RTP packet d201 received by the RTP reception processing unit 201 is the data of the video track whose track ID is 1, and the pre-buffering information indicating "the necessary time for pre-buffering is M seconds" is included in the reception message d205 which is the response to the PLAY command of the RTSP is assumed. In such case as described above, the instruction unit 205 judges whether or not M seconds have elapsed since the reception of the RTP packet d201 of the video track whose track ID is 1 was started.

When it is judged that the elapsed time is equal to the necessary time for pre-buffering (Yes in step S403), the instruction unit 205 outputs the start instruction signal d211 to the decoding unit 202 (step S404). When it is judged that the elapsed time is different from the necessary time for pre-buffering (No in step S403), the operation from the step S402 is executed again.

As described above, the data reception apparatus 200 according to the present invention has been explained using the above mentioned embodiment. However, the data reception apparatus 200 according to the present invention is not limited to this.

For example, according to the present embodiment, the pre-buffering information is acquired from the reception message d205 which is the response to the PLAY command in the RTSP. However, the pre-buffering information may be acquired from the reception message d205 which is the response to the existing command or newly specified command other than the PLAY command in the RTSP. Also, the pre-buffering information may be acquired from the message using the protocol other than the RTSP.

According to the present embodiment, the pre-buffering information indicating the necessary time for pre-buffering is acquired. However, the pre-buffering information indicating the necessary data amount for pre-buffering may be acquired.

In such case as described above, the RTP reception processing unit 201 outputs, to the instruction unit 205, total information indicating the total data amount of the RTP packet d201 received per media (content), each time the packet is received or per certain period of time. The instruction unit 205 compares the total data amount of the RTP packet d201 and the necessary data amount for pre-buffering, based on the total information. When the above mentioned data amounts correspond with each other, the instruction unit 205 outputs the start instruction signal d211. The data amounts may be compared each time the total amount information is acquired, or per certain period of time.

In addition, according to the present embodiment, the pre-buffering information converted into the reproduction parameter information is acquired as the reproduction control information. However, the information related to the reception, decoding, or display process may be acquired as the reproduction control information. In such case as described above, the instruction unit 205 or the RTSP processing unit 204 controls the decoding unit 202 and the display unit 203 based on the acquired information.

Moreover, according to the present embodiment, the necessary time for pre-buffering is acquired as the pre-buffering information, but the sequence number may be acquired as the pre-buffering information. In such case as described above, when all of the RTP packets indicated by the acquired sequence number have been received, the data reception apparatus 200 starts the decoding process. When all of the RTP packets have not been received, the data reception apparatus 200 requests the unreceived RTP packets to the data transmission apparatus 100. Otherwise, after warning the user before the decoding start, the data reception apparatus 200 starts decoding based on the predetermined conditions. The above mentioned warning informs the user of the possibility that the content display may be stopped, due to the underflow or overflow which occurs in the middle of the decoding process.

### (Third Embodiment)

Furthermore, by recording the program for realizing the data transmission apparatus 100 and the data reception apparatus 200 described in each of the above mentioned embodiments into a storage medium such as a flexible disk and the like, the process described in each of the above mentioned embodiments can be easily executed in an independent computer system.

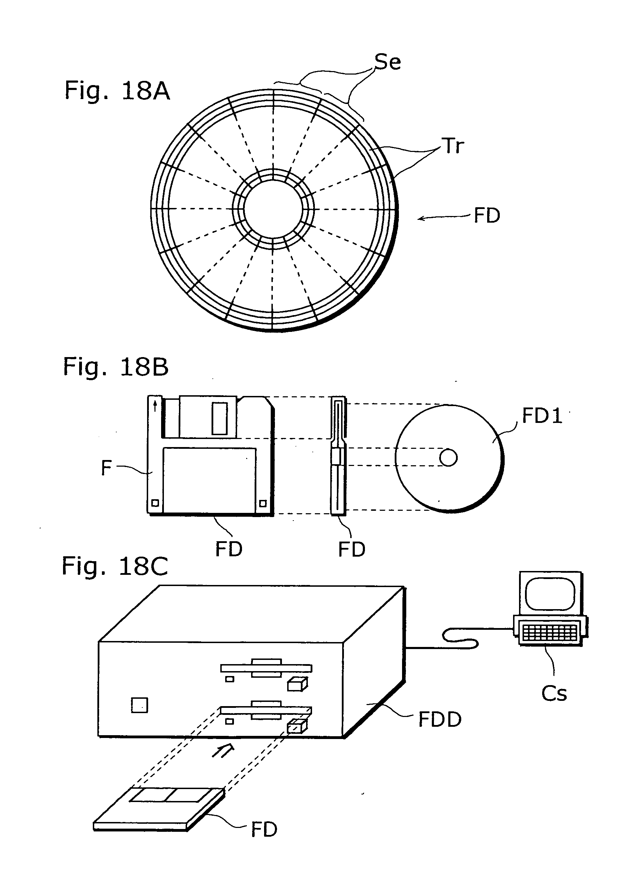

FIG. 18A, FIG. 18B and FIG. 18C are illustrations of a storage medium which stores the program for realizing the data transmission apparatus 100 and the data reception apparatus 200 according to the first and second embodiments, using the computer system.

FIG. 18B shows: outside views of the flexible disk FD from the front perspective and the side perspective; and the outside view of the disk body FD1 which is the record medium body from the front perspective. And, FIG. 18A shows a physical format example of the disk body FD1.

The disk body FD1 is internalized in the case F. A plurality of tracks Tr are formed cylindrically from the outer circumference to the inner circumference on the surface of the disk body FD1. And, each track is divided into 16 sectors Se in angular orientation. Thus, in the flexible disk FD which stores the above mentioned program, the program is recorded in the area assigned on the above mentioned disk body FD1.

Also, FIG. 18C shows the structure for recording and reproducing the above mentioned program in the flexible disk FD.

In the case where the above mentioned program is recorded into the flexible disk FD, the computer system Cs writes in the program via the flexible disk drive FDD. Also, in the case where the program in the flexible disk FD is built in the computer system Cs, the program is read out from the flexible disk FD by the disk drive FDD, and transferred to the computer system Cs.

In the above mentioned explanation, the flexible disk FD is used as the recording medium, but an optical disk may be used as the recording medium, as well. In addition, the recording medium is not limited to this, and other recording mediums which can record the program, such as an IC card, an ROM cassette can be used.

Although only some exemplary embodiments of this invention have been described in detail above, those skilled in the art will readily appreciate that many modifications are possible in the exemplary embodiments without materially departing from the novel teachings and advantages of this invention. Accordingly, all such modifications are intended to be included within the scope of this invention.

### Industrial Applicability

The data transmission apparatus according to the present invention can cause the data reception apparatus to execute the appropriate reproduction process of content data. And, the data transmission apparatus according to the present invention can be applied to, for example, a server which is used for a moving picture distribution service to a Personal Digital Assistant (PDA).

## Claims

1. A data transmission apparatus which extracts content data that is a copyrighted digital work from a file, and transmits the content data to a reception apparatus,
wherein the file is made up of (i) the content data and (ii) reproduction control information used for a reproduction process of the content data, the content data and the reproduction control information being multiplexed, and
the data transmission apparatus comprises:
a front end processing unit operable to establish and initialize a transmission path of content data with the reception apparatus;
a control transmission unit operable to extract at least a part of the reproduction control information from the file, and transmit the extracted information to the reception apparatus, after the transmission path is established and initialized by said front end processing unit;
a packet generation unit operable to acquire at least a part of content data from the file, and packetize the acquired data; and
a content transmission unit operable to transmit at least a part of the content data which has been packetized by said packet generation unit.

2. The data transmission apparatus according to Claim 1,
wherein the reproduction control information which has been multiplexed in the file is structured in a tabular form, per data unit which is plurally included in the content data, said reproduction control information including reproduction control unit information used for reproducing from the data unit,
said control transmission unit extracts, from the reproduction control information of the file, and transmits the reproduction control unit information related to a data unit which is requested by the reception apparatus, and
said packet generation unit acquires and packetizes the content data starting from the data unit requested by the reception apparatus.

3. The data transmission apparatus according to Claim 2,
wherein the reproduction control unit information indicates details to inform a timing when a decoding process should be started on the content data, said content data being transmitted by said content transmission unit and received by the reception apparatus.

4. The data transmission apparatus according to Claim 3,
wherein the reproduction control unit information indicates, as the details to inform the timing, a time from a reception start of the content data to a start of the decoding process executed by the reception apparatus.

5. The data transmission apparatus according to Claim 3,
wherein the reproduction control unit information indicates a data amount of the content data received by the reception apparatus as the details to inform the timing.

6. The data transmission apparatus according to Claim 5,
wherein said control transmission unit converts the data amount indicated by the reproduction control unit information into the time from the reception start of the content data to the start of the decoding process executed by the reception apparatus, and transmits the converted reproduction control unit information.

7. The data transmission apparatus according to Claim 6,
wherein said control transmission unit converts the reproduction control unit information, according to a transmission state of the content data which is transmitted by said content transmission unit.

8. The data transmission apparatus according to Claim 7,
wherein said content transmission unit changes a speed to transmit the content data based on a state of the transmission path.

9. The data transmission apparatus according to Claim 2,
wherein the content data is moving picture data structured including a plurality of pictures, and
the reproduction control information is structured including the reproduction control unit information per each of the plurality of pictures included in the content data.

10. The data transmission apparatus according to Claim 2,
wherein the content data is moving picture data structured including a plurality of pictures, and
the reproduction control information is structured including the reproduction control unit information per each of the intra-picture coded pictures included in the content data.

11. The data transmission apparatus according to Claim 2,
wherein the content data is moving picture data structured including a plurality of pictures, and
the reproduction control unit information indicates whether or not a correct result of decoding process can be acquired from a head picture of the data unit.

12. The data transmission apparatus according to Claim 2,
wherein the content data is moving picture data structured including a plurality of pictures, and
the reproduction control unit information indicates a part where a correct result of decoding process can be first acquired in the case where a decoding process is started from a head picture of the data unit.

13. The data transmission apparatus according to Claim 2,
wherein the content data is moving picture data including a scene made up of a plurality of consecutive pictures as the data unit, and
the reproduction control information indicates information which is necessary for initialization in decoding the plurality of pictures that make up said each scene.

14. The data transmission apparatus according to Claim 1,
wherein the content data is moving picture data structured including a plurality of pictures, and
the reproduction control information indicates a cycle of pictures which can be randomly accessed among said plurality of pictures.

15. The data transmission apparatus according to Claim 1,
wherein the reproduction control information multiplexed in the file is reproduction control unit information used for reproducing from one predetermined data unit included in the content data,
said control transmission unit extracts, from the file, and transmits the reproduction control unit information, according to a request from the reception apparatus, and
said packet generation unit acquires and packetizes the content data from the data unit, according to a request from the reception apparatus.

16. A method for transmitting data, in which content data that is a copyrighted digital work is extracted from a file and transmitted to a reception apparatus,
wherein the file is made up of (i) the content data and (ii) reproduction control information used for a reproduction process of the content data, the content data and the reproduction control information being multiplexed , and
the method for transmitting data comprises:
a front end processing step of establishing and initializing a transmission path of content data with the reception apparatus;
a control transmission step of extracting at least a part of the reproduction control information from the file, and transmitting the extracted information to the reception apparatus, after the transmission path is established and initialized by said front end processing step;
a packet generation step of acquiring at least a part of content data from the file, and packetizing the acquired data; and
a content transmission step of transmitting at least a part of the content data which has been packetized by said packet generation unit.

17. The method for transmitting data according to Claim 16,
wherein the reproduction control information which has been multiplexed in the file is structured in a tabular form, per data unit which is plurally included in the content data, including reproduction control unit information used for reproducing from the data unit,
said control transmission step extracts, from the reproduction control information of the file, and transmits the reproduction control unit information related to a data unit which is requested by the reception apparatus, and
said packet generation step acquires and packetizes the content data from the data unit requested by the reception apparatus.

18. The method for transmitting data according to Claim 17,
wherein the reproduction control unit information indicates details to inform the content data of a timing when a reproduction process should be started, said content data transmitted by said content transmission step and stored by the reception apparatus.

19. A program for extracting content data that is a copyrighted digital work from a file, and transmitting the extracted data to a reception apparatus,
wherein the file is made up of (i) the content data and (ii) reproduction control information used for a reproduction process of the content data, the content data and the reproduction control information being multiplexed, and
the method for transmitting data causes a computer to execute:
a front end processing step of establishing and initializing a transmission path of content data with the reception apparatus;
a control transmission step of extracting at least a part of the reproduction control information from the file, and transmitting the extracted information to the reception apparatus, after the transmission path is established and initialized by said front end processing step;
a packet generation step of acquiring at least a part of content data from the file, and packetizing the acquired data; and
a content transmission step of transmitting at least a part of the content data which has been packetized by said packet generation unit.
